# EUROPÄISCHE PATENTSCHRIFT

(11) **EP 1 637 850 B1**
(45) Veröffentlichungstag und Bekanntmachung des Hinweises auf die Patenterteilung: **06.01.2016**
(21) Anmeldenummer: 05450073.1
(22) Anmeldetag: 25.04.2005
(51) Int. Cl.: G01J 3/453, G01N 21/45

(54) **Miniaturized Fourier-transform spectrometer**
Spectromètre a transformée de Fourier miniaturisé
Miniaturisiertes Fourier-Transform-Spektrometer

(30) Priorität: 24.06.2004 AT 10782004
(43) Veröffentlichungstag der Anmeldung: 22.03.2006
(73) Patentinhaber: CTR Carinthian Tech Research AG, 9524 Villach/St. Magdalen (AT); Fraunhofer-Gesellschaft zur Förderung der angewandten Forschung e.V., 80686 München (DE)
(72) Erfinder: Kenda, Andreas, Dr., 9020 Klagenfurt (AT); Scherf, Werner, Dr., 9500 Villach (AT); Kraft, Martin, Dr., 9500 Villach (AT); Schenk, Harald, Dr., 01139 Dresden (DE)
(74) Vertreter: Beer & Partner Patentanwälte KG

(56) Entgegenhaltungen:
- EP-A1- 1 123 526
- WO-A2-01/73934
- US-B1- 6 384 952
- SOLF C, MOHR J UND WALLRABE U: "Miniaturized LIGA Fourier transformation spectrometer" PROCEEDINGS OF IEEE SENSORS, Bd. 2, 2003, Seiten 773-776, XP010691012 ISBN: 0-7803-8133-5
- ANTILA J, SAARI H UND OJA A: "Micro-electromechanical mirror for Fourier transform interferometry" VTT INFORMATION TECHNOLOGY, [Online] 2003, Seiten 1-6, XP002354532 Gefunden im Internet: URL:http://www.vtt.fi/tte/optical_sensors/ spectrometer-files/Antila_4thRT_on_MTN_pro c_paper_v3.pdf> [gefunden am 2005-11-16]
- GONZALEZ C ET AL: "Mesoscopic optical instrumentation: a miniature Fourier transform spectrometer" LASERS AND ELECTRO-OPTICS SOCIETY ANNUAL MEETING, 1997. LEOS '97 10TH ANNUAL MEETING. CONFERENCE PROCEEDINGS., IEEE SAN FRANCISCO, CA, USA 10-13 NOV. 1997, NEW YORK, NY, USA,IEEE, US, Bd. 2, 10. November 1997 (1997-11-10), Seiten 474-475, XP010252840 ISBN: 0-7803-3895-2
- CROCOMBE R: "MEMS technology moves process spectroscopy into a new dimension" SPECTROSCOPY EUROPE, Bd. 16, Nr. 3, 1. Juni 2004 (2004-06-01), Seiten 16-19, XP002354533
- KUNG H L ET AL: "STANDING-WAVE TRANSFORM SPECTROMETER BASED ON INTEGRATED MEMS MIRROR AND THIN-FILM PHOTODETECTOR" IEEE JOURNAL OF SELECTED TOPICS IN QUANTUM ELECTRONICS, IEEE SERVICE CENTER, US, Bd. 8, Nr. 1, Januar 2002 (2002-01), Seiten 98-105, XP001116250 ISSN: 1077-260X
- BHALOTRA S R ET AL: "Parallel-plate MEMS mirror design for large on-resonance displacement", OPTICAL MEMS, 2000 IEEE/LEOS INTERNATIONAL CONFERENCE ON 21-24 AUGUST 2000, PISCATAWAY, NJ, USA,IEEE, 21 August 2000 (2000-08-21), pages 93-94, XP010518553, DOI: 10.1109/OMEMS.2000.879642 ISBN: 978-0-7803-6257-4
- SCHENK H ET AL: "Optical MEMS for advanced spectrometers", OPTICAL MEMS AND THEIR APPLICATIONS CONFERENCE, 2005. IEEE/LEOS INTERN ATIONAL CONFERENCE ON OULU, FINLAND AUG. 1-4, 2005, PISCATAWAY, NJ, USA,IEEE, 1 August 2005 (2005-08-01), pages 117-118, XP010853277, ISBN: 978-0-7803-9278-6
- MANZARDO ET AL.: "Miniturized time-scanning Fourier transfrom spectrometer based on silicon technology", OPTICS LETTERS, vol. 24, 1999, pages 1705-1707, XP903937,

## Beschreibung

Die Erfindung betrifft eine Anordnung zum Aufbau eines kompakten Fourier-Transform (FT)-Interferometers für optische Strahlung nach dem Michelson- bzw. einem daraus abgeleiteten Prinzip.

Die Verwendung eines Michelson-Interferometers bzw. einer Sub-Form desselben, wie nach Michelson-Morley oder Happ-Genzel, in der optischen Spektroskopie, anstelle beispielsweise eines Gittermonochromators, ist Stand der Technik und durch eine Vielzahl an Literaturstellen und Patenten belegt sowie in Produkten einer Reihe von Herstellern realisiert. Der Schwerpunkt liegt dabei auf den Spektralbereichen des nahen und mittleren Infrarot (FT-NIR, FT-IR). Optische FT-Systeme werden in einer Vielzahl von Anwendungen praktisch eingesetzt, allerdings handelt es sich dabei in der Regel um off-line Anwendungen, meist in Kombination mit einer Probenahme. Für in-line Messungen oder mobile Anwendungen sind die kommerziell verfügbaren Geräte in der Regel zu groß, zu schwer, unzureichend robust und zu teuer. Eine Anbindung über optische Fasern ist, insbesonders bei größeren Abständen zwischen Messort und Geräteposition bzw. im mittleren Infrarot, nur in Spezialfällen möglich. Aus diesen Gründen decken IR-Geräte bislang nur einen kleinen Teil der möglichen Anwendungsbereiche ab. Ein möglichst kompaktes, leichtes und kostengünstiges FT-Spektrometer, das beispielsweise dezentral an verschiedenen Anlagenteilen zur Prozessverfolgung eingesetzt werden könnte, würde hier die Anwendbarkeit signifikant erweitern. Eine weitere Einschränkung klassischer FT-Systeme ist die primär durch die Massenträgheit der makroskopischen Spiegel begrenzte maximale Scannergeschwindigkeit bzw. Zeitauflösung. Für die Verfolgung transienter Systeme mit Zeitkonstanten von typischerweise < 1 ms, die derzeit nicht oder nur mit hohem Aufwand in Abhängigkeit von der Zeit untersucht werden können, wäre ein kompaktes System mit einer durch Miniaturisierung nahezu trägheitsfreien Spiegelkomponente und einer entsprechend höheren erzielbaren Modulationsfrequenz von Interesse. Gleichfalls vorteilhaft wäre ein derartiges Messgerät für Systeme bei denen in kurzer Zeit eine möglichst große Anzahl von "Scans" aufgenommen werden sollen, beispielsweise zur Verbesserung des Signal-Rausch-Verhältnisses ohne Beeinflussung des Messsignals durch zeitliche Gerätedrifts.

Vereinzelte Ansätze zur kompakten Ausgestaltung von FT-Interferometern sind literaturbekannt, bislang aber auf rein akademische Anwendungen beschränkt geblieben. Ein Ansatz zur Entwicklung eines Miniatur-FT-Interferometers (Collins et. al., Optics Letters 24, 1999) basiert auf aus Reinsiliziumeinkristallen entlang den (111)-Flächen herausgeätzten Führungen, in denen ein magnetisch betriebener Schlitten mit einem aufgesetzten Spiegel bewegt wird. Das System ermöglicht Verschiebewege von einigen Zentimetern und entsprechend hohe optische Auflösungen und ist, bei für eine praktische Anwendung ausreichend großen Spiegelflächen, kompakt und durch die kleinen erzielbaren Produktionstoleranzen robust. Einer praktischen Anwendung stehen hier insbesonders die deutlich unterdurchschnittlichen erzielbaren Spiegelgeschwindigkeiten entgegen.

Ein anderer Ansatz beruht auf der Verwendung eines Miniaturspiegels, der über eine normal zur Schwingungsrichtung ausgerichtete, elektrostatisch angetriebene Kammstruktur bewegt wird (Manzardo et. al., Optics Letters 24, 1999; Manzardo, Dissertation, Univ. Neuchatel/CH, 2002). Das dort publizierte System ist allerdings durch den geringen erzielbaren Verstellweg von < 40 µm, primär aber durch die geringe Spiegelfläche von < 0,04 mm² für einen praktischen Einsatz in einer Spektrometeranwendung ungeeignet.

Der Artikel: BHALOTRA S R ET AL: "Parallel-plate MEMS mirror design for large onresonance displacement", OPTICAL MEMS, 2000 IEEE/LEOS INTERNATIONAL CONFERENCE ON 21-24 AUGUST 2000, Seiten 93-94, zeigt einen in einem miniaturisierten Spektrometer verwendbaren micromechanischen Spiegel. Der Spiegel hat eine Oberfläche von 2 mm² und wird durch Plattenelektroden in Resonanz mit einer Schwingungsamplitude von 65 µm normal zur Spiegelebene versetzt.

Die Patentdokumente WO01/73934 und EP1123526 offenbaren coplanar liegende Kammelektroden zum Antrieb eines mikromechanischen Spiegels. In WO01/73934 wird eine durch die coplanar liegenden Kammelektroden bewirkte vertikale Versetzung des Spiegels (d.h. normal zum Substrat und zur Spiegelebene) offenbart.

Die Erfindung ist im Anspruch 1 definiert.

Weitere vorteilhafte Ausführungen der erfindungsgemäßen Anordnung sind gemäß Unteransprüchen offenbart.

Im Gegensatz zu den bekannten Lösungen zeichnet sich die vorliegende Offenbarung durch die Verwendung eines bauteilabhängig innerhalb des Bereichs 200 Hz - 20 kHz harmonisch schwingenden mikromechanischen Translations-Spiegelelementes mit einer typischen Spiegelfläche von 1 × 1 mm² oder mehr und einer nutzbaren Schwingungsamplitude von mindestens 50 µm, typischerweise 100 µm oder mehr, entsprechend einem erzielbaren Verstellweg von mindestens 100 µm, typischerweise 200 µm oder mehr, aus. Das verwendete mikromechanische Spiegelelement ist an Siliziumfedern aufgehängt, die über coplanar liegende Kammelektroden elektrostatisch in eine Schwingung normal zur Spiegelebene versetzt werden. Durch diese Art der Aufhängung und der Schwingungsanregung des Spiegels ist es erstmals möglich, ohne unzulässige Verformung des planaren Spiegelelements die für eine praktische Anwendung erforderlichen hohen Auslenkungen sowie eine ausreichend große Spiegelfläche von mindestens 1 mm² in einem mikromechanischem Translations-Spiegelelement zu realisieren und basierend darauf ein praktisch einsetzbares FT-Interferometer, beispielsweise zur Verwendung in einem FT-Spektrometer, zu bauen.

Diese Offenbarung betrifft weiters mögliche Ausführungsformen der erfindungsgemäßen Anordnung, welche im wesentlichen dadurch gekennzeichnet sind, dass mindestens ein harmonisch schwingendes mikromechanisches Translations-Spiegelelement mit einer für ein Mikro-Modul großen Schwingungsamplitude und Spiegelfläche verwendet wird, welches durch die Translationsschwingung die für ein Zweistrahlinterferometer nach Michelson erforderliche optische Modulation bewirkt.

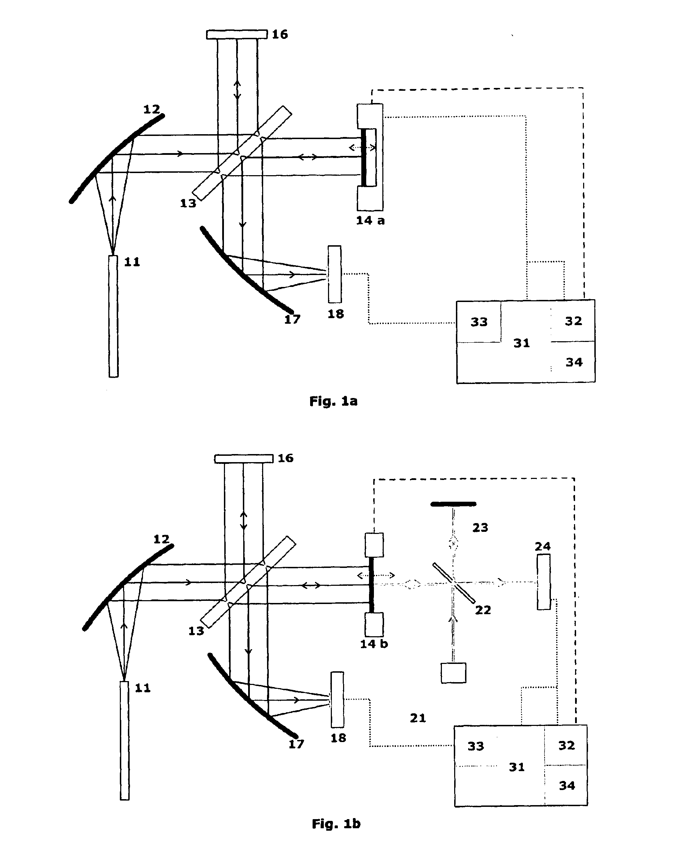

Mögliche Ausführungsformen der erfindungsgemäßen Anordnung werden anhand der Figuren 1a, 1b, 2, 3 und 4 näher erläutert. Dabei zeigt Fig. 1a eine mögliche Ausführungsform der erfindungsgemäßen Anordnung unter Verwendung einer einseitig optisch zugänglichen, schwingenden mikromechanischen Translations-Spiegelkomponente. Die Positionsbestimmung der Spiegelkomponente erfolgt in dieser Anordnung über in den mikromechanischen Bauteil integrierte Sensoren.

Fig. 1b zeigt eine mögliche Ausführungsform der erfindungsgemäßen Anordnung unter Verwendung einer beidseitig optisch zugänglichen, schwingenden mikromechanischen Translations-Spiegelkomponente. Die Positionsbestimmung der Spiegel erfolgt dabei über ein Referenz-Laserinterferometer.

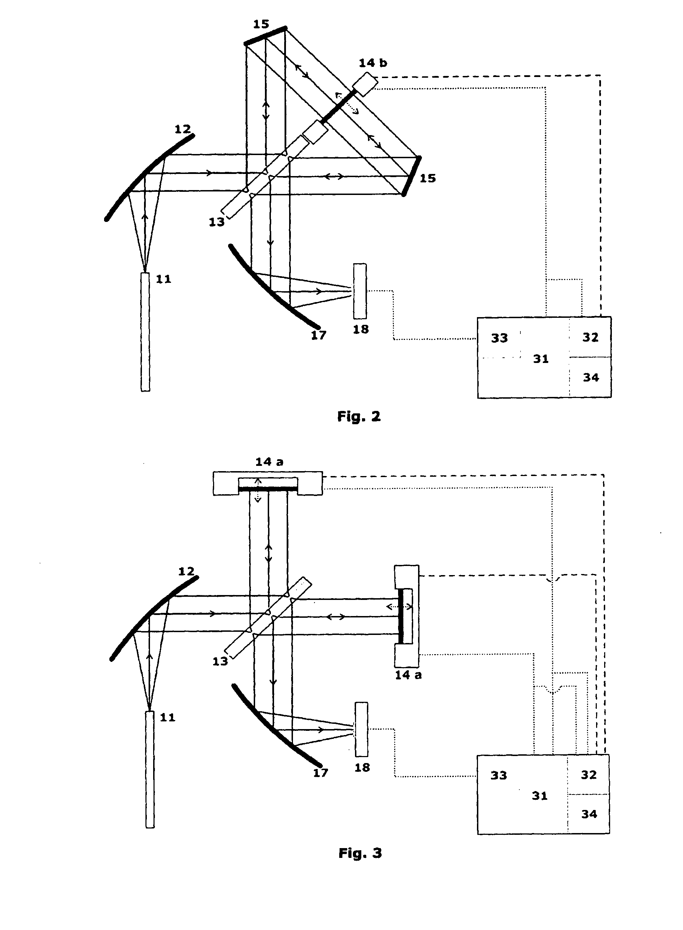

Weiters zeigt Fig. 2 eine mögliche Ausführungsform der erfindungsgemäßen Anordnung unter Verwendung einer beidseitig optisch zugänglichen, schwingenden mikromechanischen Translations-Spiegelkomponente zur simultanen Modulation der Strahlung in beiden Interferometerarmen.

Fig. 3 zeigt eine mögliche Ausführungsform der erfindungsgemäßen Anordnung unter Verwendung zweier einseitig optisch zugänglicher, schwingender mikromechanischer Translations-Spiegelkomponenten, wobei sich diese zur simultanen Modulation der Strahlung in beiden Interferometerarmen in einem synchron schwingenden Zustand mit einer festen Phasenverschiebung von vorzugsweise 180° befinden.

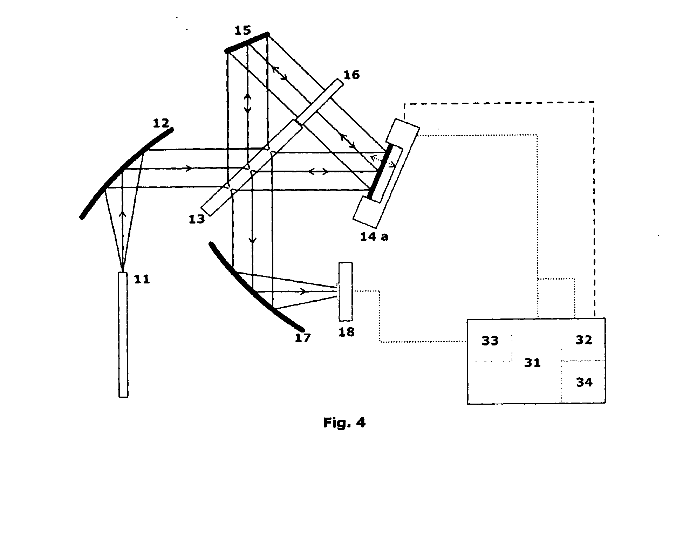

Fig. 4 zeigt eine Modifikation der in Fig. 1a dargestellten Ausführungsform der erfindungsgemäßen Anordnung unter Verwendung einer spezielle Anordnung der optischen Komponenten des Interferometers zwecks Erhöhung der effektiven optischen Pfaddifferenz und somit Verbesserung der erzielbaren optischen Auflösung.

In der ersten prinzipiellen Anordnung, wie in Fig. 1 a und 1 b dargestellt, wird ein einzelnes mikromechanisches Translations-Spiegelmodul (14a) oder (14b) zur Modulation der Strahlung in einem Interferometerast verwendet, während der, vorzugsweise spiegelbildlich zum ersten Ast angeordnete, zweite Interferometerast an Stelle des schwingenden Spiegels einen örtlich fixierten Spiegel (16) enthält. Die Abfrage der Spiegelpositionsdaten, die zur Rücktransformation des vom Detektor aufgezeichneten Interferogrammes (Wegdomäne) in ein Spektrum (Frequenzdomäne) erforderlich sind, kann wahlweise über (i) in den Spiegelbaustein integrierten Lagesensoren, beispielsweise kapazitive Durchgangssensoren, (ii) ein Referenz-Laserinterferometer, wie in Fig. 1b dargestellt, wobei in diesem Fall das mikromechanische Spiegelmodul so aufgehängt sein muss, dass beide Spiegelflächen optisch zugänglich sind, oder (iii) eine Kombination beider Verfahren erfolgen.

In der zweiten prinzipiellen Anordnung, wie in Fig. 2 dargestellt, wird ein beidseitig optisch zugängliches mikromechanisches Translations-Spiegelmodul (14 b) verwendet, welches nach dem Happ-Genzel Prinzip gleichzeitig beide Interferometerteilstrahlen moduliert.

Dadurch ergibt sich eine Verdoppelung der optischen Pfaddifferenz und somit eine verbesserte Auflösung unter Verwendung nur eines mikromechanischen Bauteils. Die Abfrage der Spiegelposition erfolgt bei einem Aufbau dieser Art vorzugsweise über im Mikrospiegelmodul integrierte, beispielsweise kapazitive, Lagesensoren.

In der dritten prinzipiellen Anordnung, wie in Fig. 3 dargestellt, werden zwei mikromechanische Translations-Spiegelmodule verwendet, die synchron mit einer festen Phasenverschiebung von 180° betrieben werden. Dadurch kann ein analoger Effekt wie durch Verwendung der oben beschriebenen Anordnung auch ohne Mikrospiegel mit beidseitig hochverspiegelter Oberfläche erzielt werden. Die Abfrage der Spiegelposition kann bei einer derartigen Anordnung wahlweise über (i) im Mikrospiegelmodul integrierte Lagesensoren, (ii) ein zweiarmig moduliertes Referenz-Laserinterferometer oder (iii) eine Kombination dieser Methoden erfolgen.

Um das optische Auflösungsvermögen des Interferometers weiter zu verbessern, ist die Verwendung von speziellen optischen Anordnungen zur Erhöhung der effektiven optische Wegdifferenz vorteilhaft. Durch die Verwendung von optischen Miniatur- und Mikrobauteilen ist insbesonders die Verwendung einer Strahlführung mit doppelter Ausnützung der Spiegelverschiebung, wie in Fig. 4 als Modifikation der erfindungsgemäßen Anordnung nach Fig. 1a dargestellt, sinnvoll und zielführend. Der direkte Strahlengang vom Strahlteiler (13) zum mikromechanischen Translationsspiegel (14 a, 14 b) wird durch eine spitzwinkelige Strahlfühung ersetzt, bei der der Translationsspiegel (14 a, 14 b) gleichzeitig als Umlenkspiegel zwischen Strahlteiler (13) und einem örtlich fixierten Spiegel (16) fungiert. In einer derartigen Anordnung wird die Translationsverschiebung des mikromechanischen Spiegels doppelt ausgenutzt, was die effektive optische Wegdifferenz erhöht und somit die optische Auflösungsfähigkeit des Interferometers verbessert. Vorteilhafterweise wird der zweite Interferometerarm spiegelbildlich symmetrisch angelegt, wobei anstelle des mikromechanischen Spiegels ein weiterer örtlich fixierter Spiegel (15) eingesetzt wird. Eine derartige Modifikation kann in analoger Weise auch zur Erhöhung der effektiven Auflösung für die in Fig. 1b, Fig. 2 und Fig. 3 dargestellten Ausführungsformen der erfindungsgemäßen Anordnung eingesetzt werden.

Allen Anordnungen gemeinsam ist der grundlegende Strahlengang gemäß dem Prinzip eines Standard-Zweistrahlinterferometers mit Strahlteiler nach Michelson. Für den erfindungsgemäßen, miniaturisierten Aufbau ist es vorteilhaft, das Interferometer im Strahlengang hinter der zu untersuchenden Probe anzuordnen. Dadurch kann auf einfache Weise das Auftreten technischer Probleme, die sich aus der Anwesenheit einer Wärmequelle (Strahlungsquelle) in unmittelbarer Nähe eines hochkompakt aufgebauten Spektrometers ergeben können, vermieden werden. Die optische Strahlung wird entweder direkt oder beispielsweise über eine Faseroptik (11) in das Spektrometer geleitet, über eine geeignete Eingangsoptik (12) parallelisiert und in das Spektrometer projiziert. An einem spektral geeigneten, miniaturisierten Strahlteiler (13) wird der Strahl in zwei jeweils 50%ige Teilstrahlen zerlegt und in die beiden Inferferometerarme geleitet. In diesen wird die Strahlung, entsprechend der gewählten Anordnung, von einem oder zwei mikromechanischen Bauelementen (14 a, 14 b) moduliert zurückreflektiert, interferiert am Strahlteiler (13) mit der Strahlung aus dem jeweils anderen Interferometerast und wird über eine Kollimationsoptik (17) zu einem Detektor (18) geleitet. Als vorteilhaft haben sich Anordnungen mit einer 90° oder einer 600/1200 Interferometer-Strahlgeometrie erwiesen, aber auch andere Geometrien sind für spezifische Anwendungen und Anforderungen denkmöglich und realisierbar. Der Betrieb der mikromechanischen Spiegel erfolgt über Anlegen von Spannung auf die in den Bauteil integrierten coplanaren Kammelektroden.

Erfindungsgemäß werden mikromechanische Spiegel (i) mit einer erzwungenen Schwingfrequenz nahe der Resonanzfrequenz des Bauteils oder (ii) in Resonanz betrieben . Im Fall der erzwungenen Anregung mit einer vorgegebenen Schwingfrequenz wird diese Frequenz von der Spiegelsteuerung (32) bestimmt und kann, über einen gewissen Bereich, variiert werden. Im Fall der resonanten Spiegelanregung ist die Frequenz durch den Bauteil fest vorgegeben, dafür sind höhere Auslenkungen des mikromechanische Translations-Schwingspiegels möglich. Die für den resonanten Betrieb erforderliche Rückkopplung des Schwingungszustandes erfolgt vorzugsweise über in den mikromechanischen Schwingspiegel integrierte Sensoren, beispielsweise auf kapazitiver Basis, welche die Spiegelposition mindestens zweimal pro voller Schwingung erfassen und an die Spiegelsteuerung (32) übermitteln.

Für die Fourier-Rücktransformation der am Detektor (18) aufgezeichneten Interferogramme ist die Korrelation mit der Spiegelposition erforderlich. Dies erfolgt bei klassischen Geräten vorzugsweise über einen Laserstrahl der parallel zum IR-Strahlengang eingekoppelt wird. Diese Anordnung ist, obwohl prinzipiell möglich, im gegenständlichen Fall unvorteilhaft, da dadurch signifikante Anteile der Fläche der mikromechanischen Spiegel nicht für das Nutzsignal zur Verfügung stehen. Vorteilhafterweise wird daher ein beidseitig optisch zugänglicher mikromechanischer Spiegel (14 b) verwendet, dessen Vorderseite als beweglicher Spiegel für das Nutzsignal im Infraroten und dessen Rückseite als beweglicher Spiegel für das Laser-Referenzinterferometer verwendet wird. Das Referenzinterferometer besteht dabei vorteilhafterweise aus einer wellenlängenstabilisierten Laserdiode (21), vorzugsweise im sichtbaren Spektralbereich, einem spektral geeigneten Beamsplitter (22) und einer entsprechenden Detektionseinheit (24), beispielsweise einer Silizium-Avalanche-Photodiode ("Si-APD"), sowie gegebenenfalls einem feststehenden Spiegel (23), wie in Fig. 1b exemplarisch dargestellt.

Alternativ zur optischen Positionsbestimmung können in den mikromechanischen Schwingspiegel integrierte Sensoren, wie sie auch beispielsweise für eine resonante Spiegelführung erforderlich sind, verwendet werden. Durch Kenntnis des Schwingverhaltens der mikromechanischen Komponente in Kombination mit der Bestimmung der Spiegelposition mindestens zweimal pro Schwingungsperiode lässt sich die Spiegelposition auf elektronischem Weg mit für die Mehrzahl der Anwendungen ausreichender Genauigkeit ermitteln.

Für spezielle Anwendungen ist überdies eine Kombination der beiden Methoden zur Lagebestimmung möglich.

Als Detektoren (18) können beispielsweise ein InGaAs-Detektorelement für das nahe Infrarot oder ein, vorzugsweise gekühlter, HgCdTe-Detektor für das mittlere Infrarot, jeweils mit auf die Spiegelfrequenz abgestimmter Zeitdynamik, verwendet werden. Als Kühlung kommen, je nach Anwendung, eine Flüssigstickstoffkühlung, eine thermoelektrische Kühlung oder eine Closed-Circle-Cryokühlmaschine, insbesonders nach dem Prinzip eines Stirling-Kühlers, in Betracht. Die zum Betrieb des Detektors erforderlichen elektronischen Elemente (33), insbesonders ein auf den Detektor abgestimmter Vorverstärker und ein, dem dynamischen Bereich angepasster, Analog/Digital-Signalkonverter werden vorteilhafterweise in die Spektrometerelektronik integriert.

Die Steuerung wird vorteilhafter Weise mittels einer integrierten Elektronik mit einem oder mehreren, anwendungsspezifisch programmierten, digitalen Signalprozessoren (DSP) realisiert, die, neben der Steuerung (32) des mikromechanischen Spiegels (14), die Signale des Detektors (18) in einer Eingangsstufe (33) vorverarbeitet und an die interne Datenverarbeitung (31) weiterleitet. Die interne Datenverarbeitung korreliert in Folge die Detektordaten mit den Spiegelpositionsdaten und transformiert das wegabhängige Interferogramm durch geeignete Transformations- und Korrekturalgorithmen, beispielsweise zur Kompensation der nicht-linearen Spiegelbewegung während des Scanvorgangs bei möglichst großer Spiegelhubausnützung und/oder der Spiegelverformung während der Bewegung, in Leistungsspektren. Diese Leistungsspektren werden dann über eine geeignete elektronische Schnittstelle (34), vorzugsweise einer seriellen Schnittstelle nach dem USB-Standard, an ein übergeordnetes System, beispielsweise einen PC, übertragen.

Für den Betrieb der erfindungsgemäß verwendeten mikromechanischen Translationsspiegel ist es erforderlich, die Spiegel in einem Vakuum von typischerweise = 10 mbar zu betreiben. Dafür ist es möglich und sinnvoll, das gesamte das Spektrometer, sowie optional auch das Detektorelement und/oder die Geräteelektronik bzw. Teile der Geräteelektronik, umfassende Gehäuse vakuumdicht auszuführen und bei einem Druck kleiner dem maximal zulässigen Betriebsdruck zu betreiben. Alternativ ist es möglich, nur das mikromechanische Translations-Spiegelement (14 a, 14 b) in ein vakuumdichtes Gehäuse zu verpacken. Dabei ist dieses Gehäuse mit, für den jeweiligen Wellenlängenbereich transparenten, Fenstern auszustatten, wobei vorzugsweise Fenster mit einer für den zu transmittierenden Wellenlängenbereich optimierten Antireflexionsbeschichtung verwendet werden. Im Fall der Ausführung gemäß der zweiten angeführten Bauform ist es, in Anlehnung an den für FT-IR Großgeräte üblichen Stand der Technik, vorteilhaft, in das Gerätegehäuse eine, vorzugsweise einfach auswechselbare, Patrone mit einem Trockenmittel zu integrieren, um Luftfeuchtigkeit zu entfernen.

Zusammenfassend ist festzustellen, dass es unter Verwendung der in den Figuren 1 bis 4 dargestellten bzw. davon abgeleiteten Geometrien erstmals möglich ist, ein praktisch anwendbares FT-Spektrometer für das nahe und/oder mittlere Infrarot unter Verwendung von mikromechanischen Translations-Spiegelkomponenten zu realisieren. Die erfindungsgemäß eingesetzten, harmonisch schwingenden mikromechanischen Translations-Spiegelkomponenten übernehmen dabei in zufrieden stellender Art und Weise die Funktion bekannter, beweglicher Spiegel. Durch die Verwendung eines nahezu masselosen Mikrobauteils, wie dies erfindungsgemäß vorgeschlagen wird, können im Vergleich zu üblichen Systemen Anordnungen mit deutlich geringerer Baugröße sowie eine um mehrere Größenordnungen höhere Spiegelmodulationsfrequenz erzielt werden. Die erfindungsgemäße Anordnung lässt sich in einem breiten Einsatzbereich verwenden, wobei insbesondere auf deren Verwendung in der optischen Spektroskopie hingewiesen wird.

## Patentansprüche

1. Miniaturisiertes Fourier-Transform-Interferometer für optische Strahlung nach dem Michelson- bzw. einem daraus abgeleiteten Prinzip, nämlich dem Zweistrahlinterferometerprinzip, wobei in mindestens einem der Interferometerarme ein optisch einseitig (14 a) oder beidseitig (14 b) zugänglicher, bauteilabhängig innerhalb des Bereiches von 200 Hz bis 20 kHz harmonisch schwingender, elektrostatisch angetriebener mikromechanischer Translationsspiegel mit einer effektiven Schwingungsamplitude **von 100µm oder mehr, entsprechend einem erzielbarem Verstellweg von 200 µm oder mehr,** sowie einer nutzbaren Spiegelfläche von mindestens 1 mm² vorgesehen ist, der an Siliziumfedern aufgehängt ist, die über coplanar liegende Kammelektroden elektrostatisch in eine Schwingung normal zur Spiegelebene **mit einer erzwungenen Schwingfrequenz nahe der Resonanzfrequenz des Bauteils versetzt werden, wobei das mikromechanische Translations-Spiegelelement in ein Vakuum-dichtes Gehäuse verpackt und in einem Vakuum von gleich 10 mbar betrieben wird,** und wobei im miniaturisierten Fourier-Transform-Interferometer eine Elektronik integriert ist, mit welcher Detektordaten ermittelt werden, die in einer internen Datenverarbeitung (31) mit den Spiegelpositionsdaten korreliert werden.

2. Miniaturisiertes Fourier-Transform-Interferometer nach Anspruch 1, **dadurch gekennzeichnet, dass** der die Strahlung modulierende mikromechanische Translationsspiegel (14 a bzw. 14 b) in einer spitzwinkeligen Strahlführung zwischen dem Strahlteiler (13) und einem örtlich fixierten Spiegel (16) angeordnet ist sodass durch diese Strahlführung eine doppelte Ausnutzung der Schwingungsamplitude des mikromechanischen Translationsspiegels bewirkt und damit die erzielbare optische Auflösung erhöht wird.

3. Miniaturisiertes Fourier-Transform-Interferometer nach Anspruch 1 oder 2, **dadurch gekennzeichnet, dass** in beiden Interferometerarmen ein beidseitig optisch zugänglicher mikromechanischer Translationsspiegel zur simultanen Modulation der Strahlung (14 b) vorgesehen sind.

4. Miniaturisiertes Fourier-Transform-Interferometer nach Anspruch 1 oder 2, **dadurch gekennzeichnet, dass** in beiden Interferometerarmen zwei synchron mit einer, vorzugsweise elektronisch, konstant gehaltenen Phasenverschiebung von 180° schwingende separate mikromechanische Translationsspiegel (14 a bzw. 14 b) zur simultanen Modulation der Strahlung vorgesehen sind.

5. Miniaturisiertes Fourier-Transform-Interferometer nach einem der Ansprüche 1 bis 4 mit beidseitig optisch zugänglichem Translationsspiegel (14 b), **dadurch gekennzeichnet, dass** an der dem Strahlengang des Interferometers abgewandte Seite des Translationsspiegels (14 b) ein Referenz-Laserinterferometer angeordnet ist, welches besteht aus
- einer frequenz- und temperaturstabilisierten Laserdiode (21), vorzugsweise mit einer Emissionswellenlänge im sichtbaren Spektralbereich,
- einem spektral geeigneten Strahlteiler (22),
- einem feststehenden Spiegel (23), und
- einer geeigneten Photodiode (24), wobei die an der Photodiode (24) gemessene modulierte Laserstrahlung als Signal zur zeitabhängigen Lagebestimmung des beweglichen mikromechanischen Spiegels an die Datenverarbeitung (31) übermittelt wird.

6. Miniaturisiertes Fourier-Transform-Interferometer nach einem der Ansprüche 1 bis 5, **dadurch gekennzeichnet, dass** in den mikromechanischen Translations-Schwingspiegel (14 a, 14 b) vorzugsweise kapazitive, Durchgangssensoren integriert sind, welche mindestens 2 mal pro Schwingungsperiode die Position bzw. Phasenlage des schwingenden Mikrospiegels erfassen, wobei die Sensordaten als Signal zur zeitabhängigen Lagebestimmung des beweglichen mikromechanischen Spiegels an eine Spiegelsteuerung (32) und/oder an die Datenverarbeitung (31) übermittelt werden.

7. Miniaturisiertes Fourier-Transform-Interferometer nach einem der Ansprüche 1 bis 6, **dadurch gekennzeichnet, dass** der mikromechanische Translations-Schwingspiegel (14 a, 14 b) mit einer Frequenz nahe 1 kHz schwingt.

## Claims

1. Miniaturised Fourier transform interferometer for optical radiation in accordance with the Michelson principle, or more particularly a principle derived from the latter, namely the two beam interferometer principle, wherein an electrostatically-driven micromechanical translatory mirror is provided in at least one of the arms of the interferometer, being optically accessible on one face (14 a), or on both faces (14 b), oscillating harmonically within the range of 200 Hz to 20 kHz depending upon the component, with an effective oscillation amplitude of 100 µm or more, corresponding to an achievable displacement path of 200 µm or more, and having a usable mirror surface of at least 1 mm², which mirror is suspended on silicon springs, which are electrostatically displaced by means of coplanar comb electrodes into an oscillation normal to the plane of the mirror, with a forced oscillation frequency near the resonance frequency of the component, wherein the micromechanical translatory mirror element is packed into a vacuum-tight housing and is operated in a vacuum of 10 mbar, and wherein electronic equipment is integrated in the miniaturised Fourier transform interferometer, with which detector data are determined, which in an internal data processor (31) are correlated with the mirror position data.

2. Miniaturised Fourier transform interferometer according to claim 1, **characterised in that** the micromechanical translatory mirror (14 a or 14 b, respectively) modulating the radiation is arranged in an acute-angle beam guide between the beam splitter (13) and a mirror (16) that is fixed in position, so that by means of the said beam guide a doubling of the utilisation of the oscillation amplitude of the micromechanical translatory mirror is effected, and by this means the optical resolution that can be achieved is increased.

3. Miniaturised Fourier transform interferometer according to claim 1 or 2, **characterised in that** a micromechanical translatory mirror that is optically accessible on both sides is provided in both arms of the interferometer for the simultaneous modulation of the radiation (14 b).

4. Miniaturised Fourier transform interferometer according to claim 1 or 2, **characterised in that** two separate micromechanical translatory mirrors (14 a or 14 b, respectively) oscillating synchronously with a phase displacement of 180° that is held constant, preferably electronically, are provided in both arms of the interferometer for the simultaneous modulation of the radiation.

5. Miniaturised Fourier transform interferometer according to any one of the claims 1 to 4, with translatory mirrors (14 b) that are optically accessible on both sides, **characterised in that** a reference laser interferometer is arranged on the side of the translatory mirror (14 b) facing away from the beam path of the interferometer; the reference laser interferometer consists of
- a frequency- and temperature-stabilised laser diode (21), preferably with an emission wavelength in the visible spectral range,
- a spectrally suitable beam splitter (22),
- a mirror (23) that is fixed in position, and
- a suitable photodiode (24), wherein
the modulated laser radiation measured on the photodiode (24) is transmitted to the data processor (31) as a signal for the time-dependent determination of the position of the moveable micromechanical mirror.

6. Miniaturised Fourier transform interferometer according to any one of the claims 1 to 5, **characterised in that** directional sensors, preferably capacitive, are integrated into the micromechanical translatory oscillating mirror (14 a, 14 b) which record the position and phase of the oscillating micro-mirror at least 2 times per oscillation period, wherein the sensor data are transmitted to a mirror controller (32) and/or to the data processor (31) as a signal for the time-dependent determination of the position of the moveable micromechanical mirror.

7. Miniaturised Fourier transform interferometer according to any one of the claims 1 to 6, **characterised in that** the micromechanical translatory oscillating mirror (14 a, 14 b) oscillates with a frequency of approximately 1 kHz.

## Revendications

1. Interféromètre par transformée de Fourier miniaturisé pour un rayonnement optique selon le principe de Michelson ou dérivé de celui-ci, à savoir le principe de l'interféromètre à double faisceau, dans lequel est prévu, dans au moins un des bras d'interféromètre, un miroir de translation micromécanique accessible optiquement d'un côté (14 a) ou des deux côtés (14 b), oscillant harmonieusement en fonction de l'élément constitutif dans les limites de la plage de 200 Hz à 20 kHz, entraîné électro-statiquement, avec une amplitude effective d'oscillation de 100 µm ou plus, conformément à une course de réglage de 200 µm ou plus pouvant être obtenue ainsi qu'avec une surface de miroir utile d'au moins 1 mm², lequel miroir est suspendu au niveau de ressorts en silicium qui sont soumis électro-statiquement, via des électrodes en peigne situées de manière coplanaire, à une oscillation normale au plan de miroir avec une fréquence d'oscillation forcée proche de la fréquence de résonance de l'élément constitutif, dans lequel l'élément de miroir de translation micromécanique est emballé dans un boîtier étanche au vide et est exploité dans un vide égal à 10 mbars, et dans lequel une électronique est intégrée dans l'interféromètre par transformée de Fourier, avec laquelle des données de détection sont déterminées, lesquelles sont mises en corrélation avec les données de position de miroir dans un dispositif de traitement de données interne (31).

2. Interféromètre par transformée de Fourier miniaturisé selon la revendication 1, **caractérisé en ce que** le miroir de translation micromécanique (14 a ou 14 b) modulant le rayonnement est disposé dans un guidage de faisceau à angle aigu entre le séparateur de faisceau (13) et un miroir (16) fixé localement, de telle sorte que grâce à ce guidage du faisceau, on obtient une exploitation double de l'amplitude d'oscillation du miroir de translation micromécanique et augmente ainsi la résolution optique pouvant être obtenue.

3. Interféromètre par transformée de Fourier miniaturisé selon la revendication 1 ou 2, **caractérisé en ce que**, dans les deux bras d'interféromètre, on prévoit un miroir de translation micromécanique accessible optiquement des deux côtés pour la modulation simultanée du rayonnement (14 b).

4. Interféromètre par transformée de Fourier miniaturisé selon la revendication 1 ou 2, **caractérisé en ce que**, dans les deux bras d'interféromètre, on prévoit deux miroirs de translation micromécaniques (14 a ou 14 b) séparés, oscillant de manière synchrone avec un décalage de phase de 180° maintenu constant de préférence électroniquement, pour la modulation simultanée du rayonnement.

5. Interféromètre par transformée de Fourier miniaturisé selon l'une des revendications 1 à 4 avec un miroir de translation (14 b) accessible optiquement des deux côtés,
**caractérisé en ce que**, du côté tournant le dos à la trajectoire du faisceau de l'interféromètre du miroir de translation (14 b), un interféromètre laser de référence est disposé, lequel se compose :
- d'une diode laser (21) stabilisée en fréquence et en température, de préférence avec une longueur d'onde d'émission dans la plage spectrale visible,
- un séparateur de faisceau (22) adapté de manière spectrale,
- un miroir (23) stationnaire, et
- une photodiode (24) adéquate,
dans lequel le rayonnement laser modulé mesuré au niveau de la photodiode (24) est transmis en tant que signal pour la détermination de position en fonction du temps du miroir micromécanique mobile à l'attention du dispositif de traitement de données (31).

6. Interféromètre par transformée de Fourier miniaturisé selon l'une des revendications 1 à 5, **caractérisé en ce que** des capteurs de passage, de préférence capacitifs, sont intégrés dans le miroir oscillant de translation micromécanique (14 a, 14 b), lesquels détectent au moins 2 fois par période d'oscillation la position ou la position de phase du micro-miroir oscillant, dans lequel les données de détection sont transmises en tant que signal pour la détermination de position en fonction du temps du miroir micromécanique mobile à l'attention d'une commande de miroir (32) et/ou du dispositif de traitement de données (31).

7. Interféromètre par transformée de Fourier miniaturisé selon l'une des revendications 1 à 6, **caractérisé en ce que** le miroir oscillant de translation micromécanique (14 a, 14 b) oscille à une fréquence proche de 1 kHz.
